# EUROPEAN PATENT APPLICATION

(11) **EP 4 622 329 A1**
(43) Date of publication of application: **24.09.2025**
(21) Application number: 23903933.2
(22) Date of filing: 12.12.2023
(51) Int. Cl.: H04W 24/10, H04W 72/541, H04J 11/00, H04W 76/15, H04W 88/06

(54) **METHOD AND DEVICE FOR TRANSMITTING OR RECEIVING IDC-RELATED INFORMATION IN WIRELESS COMMUNICATION SYSTEM**

(30) Priority: 13.12.2022 KR 20220173645
(71) Applicant: Samsung Electronics Co., Ltd., Suwon-si, Gyeonggi-do 16677 (KR)
(72) Inventor: KIM, Sangbum, Suwon-si Gyeonggi-do 16677 (KR)
(74) Representative: Nederlandsch Octrooibureau
(86) International application number: PCT/KR2023/020359
(87) International publication number: WO 2024/128730

(57) **Abstract**

The present disclosure relates to a 5G or 6G communication system for supporting a higher data transfer rate. Specifically, in the present disclosure, a terminal transmits, to a base station, a message for reporting an in-device coexistence (IDC) problem on the basis of IDC configuration information in a dual connectivity (DC) environment, and the message comprises first information on a frequency range related to the IDC problem and second information on time division multiplexing (TDM) related to the IDC problem.

## Description

### [Technical Field]

The disclosure relates to a process of reporting an in-device coexistence (IDC) problem by a terminal and a base station in a wireless communication system (or mobile communication system). Specifically, the disclosure relates to a method and a device by which a terminal and a base station transmit and receive IDC-related information to report an IDC problem.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure is to improve a procedure of reporting an in-device coexistence (IDC) problem and, in particular, an aspect of the disclosure is to propose a procedure of efficiently reporting the interference between a 3rd Generation Partnership Project (3GPP) and a non-3GPP radio access technology (RAT).

### [Solution to Problem]

A method performed by a terminal according to an embodiment of the disclosure includes, based on new radio dual connectivity (NR-DC) configured for a first base station and a second base station supporting new radio (NR), receiving, from the first base station, in-device coexistence (IDC) configuration information in which an IDC-related configuration provided by the second base station is reflected, and transmitting a message for reporting an IDC problem to the first base station, based on the IDC configuration information, wherein the message includes first information on a frequency range related to the IDC problem and second information on time division multiplexing (TDM) related to the IDC problem.

A method performed by a first base station according to an embodiment of the disclosure includes, based on NR-DC configured for the first base station and a second base station supporting NR, receiving an IDC-related configuration from the second base station, transmitting, to a terminal, IDC configuration information in which the configuration is reflected, and receiving a message for reporting an IDC problem from the terminal, based on the configuration information, wherein the message includes first information on a frequency range related to the IDC problem and second information on TDM related to the IDC problem.

A terminal according to an embodiment of the disclosure includes a transceiver and a controller connected to the transceiver, wherein the controller is configured to, based on NR-DC configured for a first base station and a second base station supporting NR, receive, from the first base station, IDC configuration information in which an IDC-related configuration provided by the second base station is reflected, and transmit a message for reporting an IDC problem to the first base station, based on the IDC configuration information, and wherein the message includes first information on a frequency range related to the IDC problem and second information on TDM related to the IDC problem.

A first base station according to an embodiment of the disclosure includes a transceiver and a controller connected to the transceiver, wherein the controller is configured to, based on NR-DC configured for the first base station and a second base station supporting NR, receive an IDC-related configuration from the second base station, transmit, to a terminal, IDC configuration information in which the configuration is reflected, and receive a message for reporting an IDC problem from the terminal, based on the configuration information, and wherein the message includes first information on a frequency range related to the IDC problem and second information on TDM related to the IDC problem.

### [Advantageous Effects of Invention]

According to various embodiments proposed in the disclosure, a terminal and a base station may efficiently perform a procedure of reporting an IDC problem. In particular, a procedure of transmitting and receiving IDC-related information in a DC environment may be simply and efficiently performed.

### [Brief Description of Drawings]

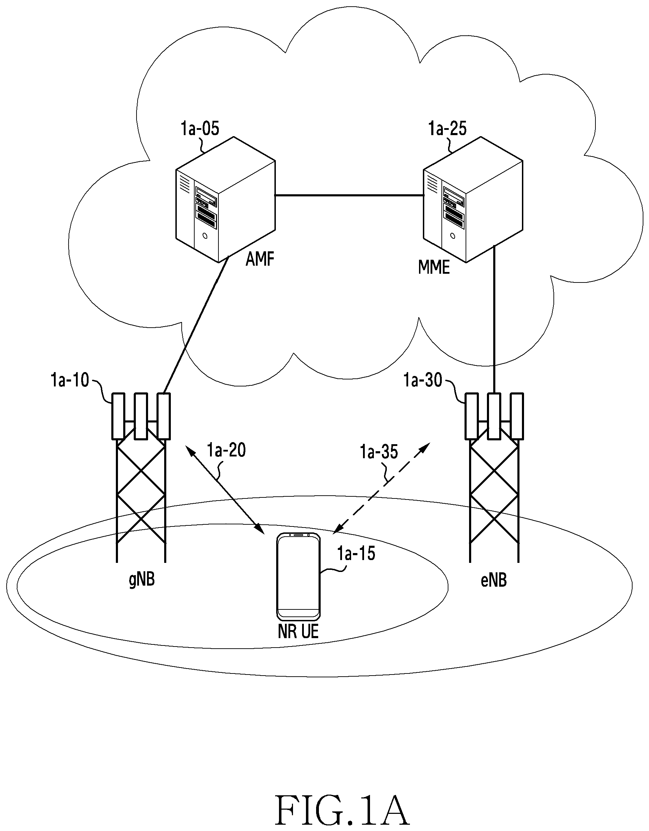

FIG. 1A illustrates a structure of a next-generation mobile communication system according to an embodiment of the disclosure.

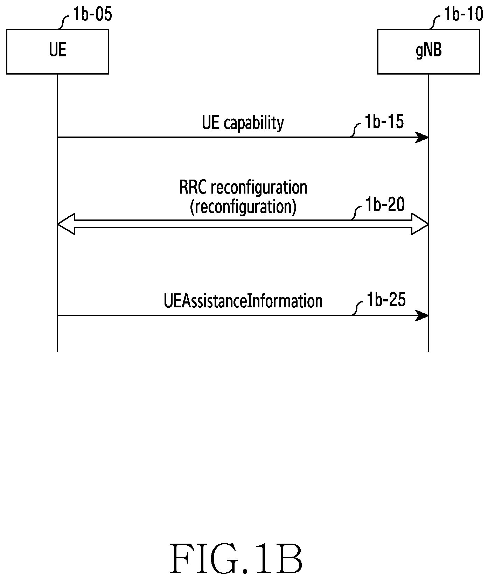

FIG. 1B is a flowchart of a process of reporting predetermined information that reports an item preferred by a terminal, to a base station in a mobile communication system according to an embodiment of the disclosure;

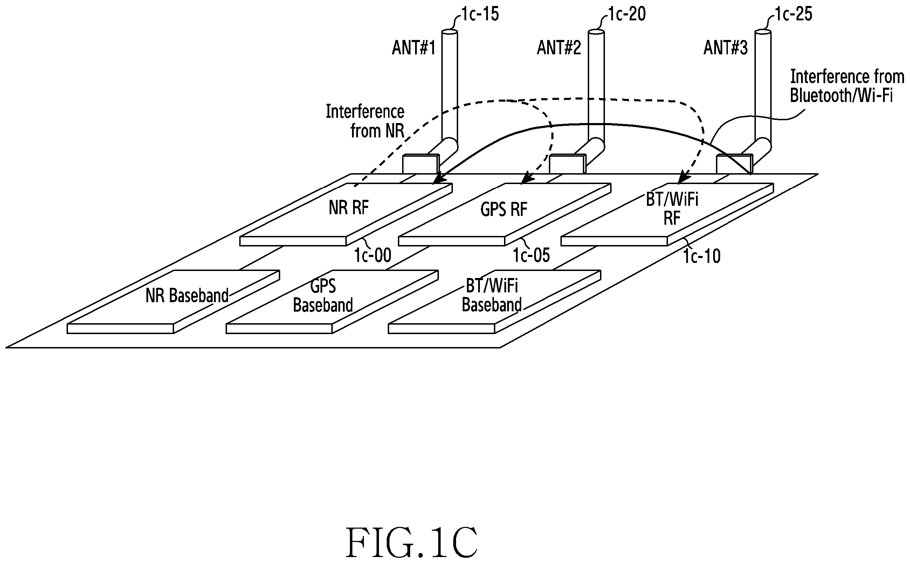

FIG. 1C is a diagram illustrating an IDC problem according to an embodiment of the disclosure;

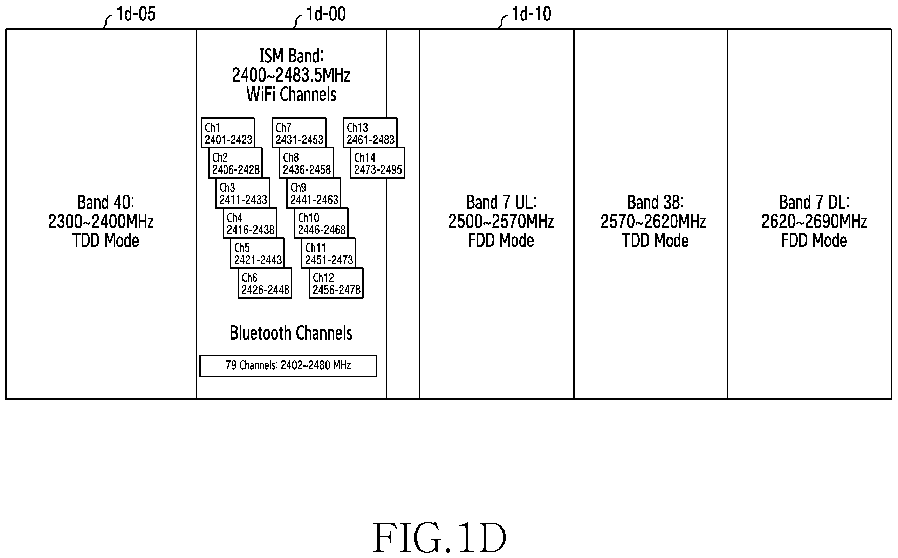

FIG. 1D is a schematic diagram illustrating a frequency band adjacent to an industry-science-medical (ISM) band among frequencies used for mobile communication in 3GPP according to an embodiment of the disclosure;

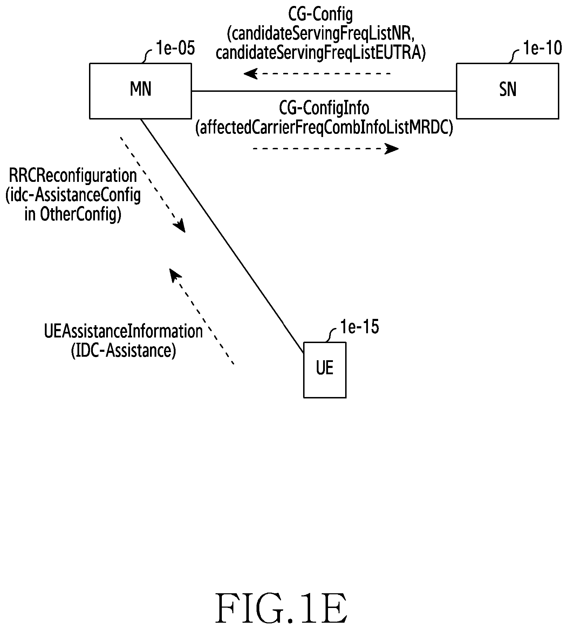

FIG. 1E is a diagram illustrating a case where a master node (MN) provides frequency-of-interest information to a secondary node (SN) and a terminal reports IDC information related to a corresponding frequency to the MN in an NR-DC environment according to an embodiment of the disclosure;

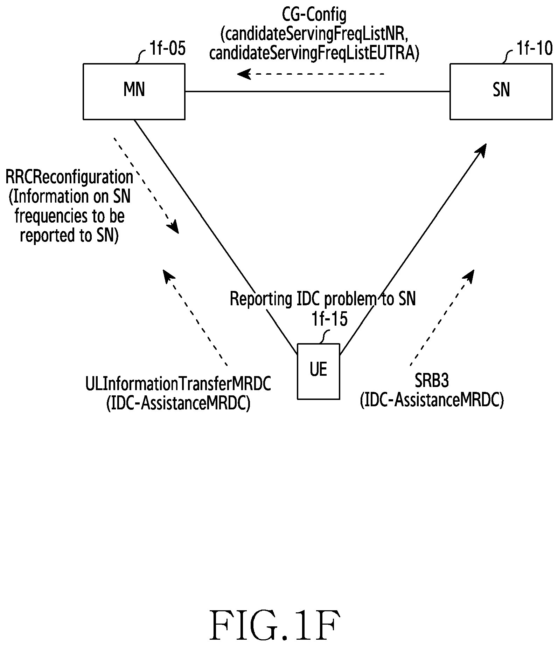

FIG. 1F is a diagram illustrating a case where an MN provides frequency-of-interest information to an SN and a terminal reports IDC information related to a corresponding frequency to the SN in an NR-DC environment according to an embodiment of the disclosure;

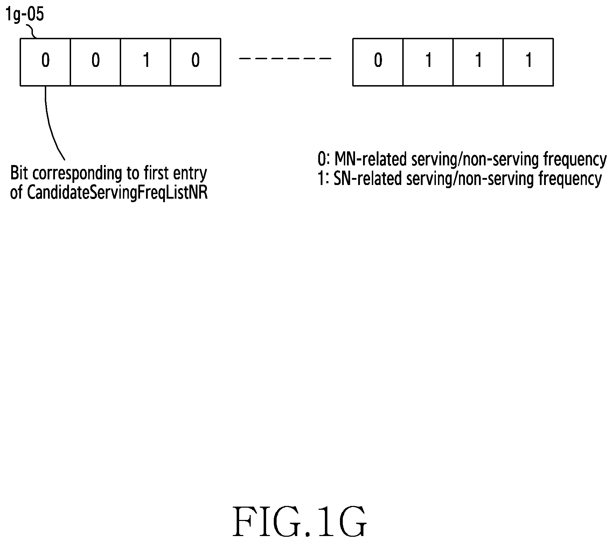

FIG. 1G is a diagram illustrating a bitmap form indicating a frequency of interest provided by an SN according to an embodiment of the disclosure;

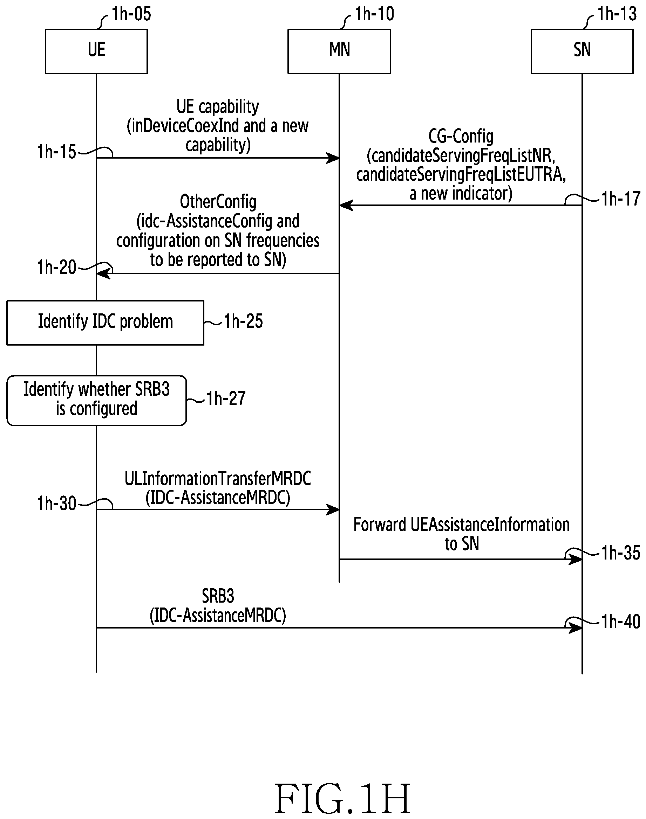

FIG. 1H is a flowchart of a process in which an MN provides frequency-of-interest information to an SN and a terminal reports IDC information related to a corresponding frequency to the SN in an NR-DC environment according to an embodiment of the disclosure;

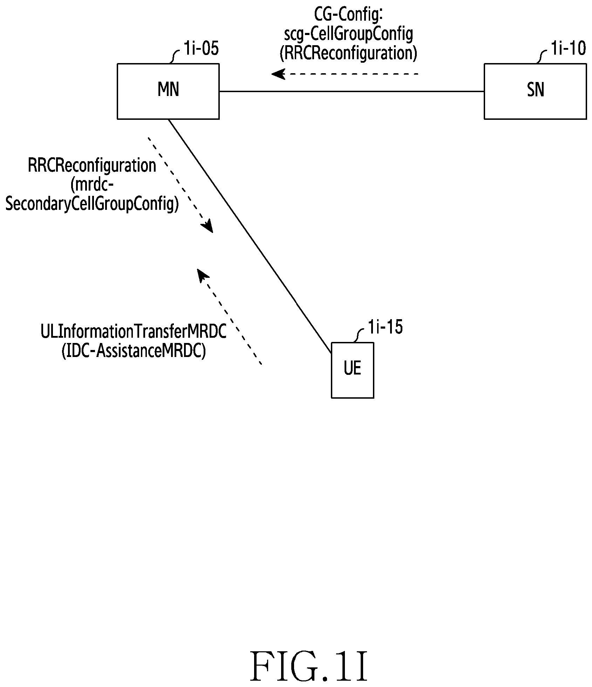

FIG. 1I is a diagram illustrating a case where a terminal reports a frequency of interest provided by an SN to the SN by using an ULInformationTransferMRDC message according to an embodiment of the disclosure;

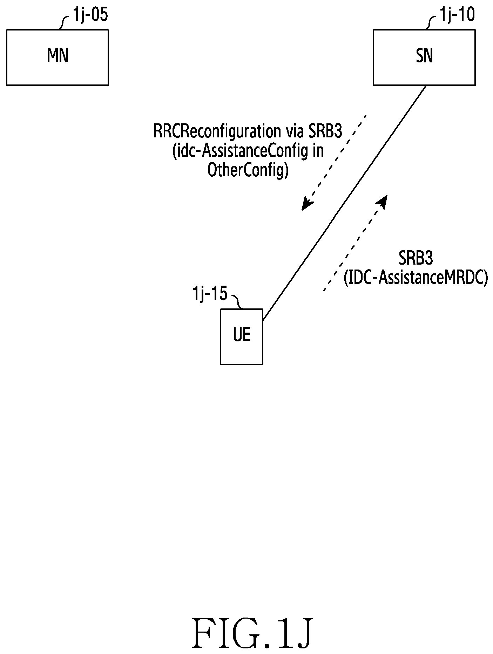

FIG. 1J is a diagram illustrating a case where a terminal directly reports a frequency of interest provided by an SN to the SN through signaling radio bearer 3 (SRB3) according to an embodiment of the disclosure;

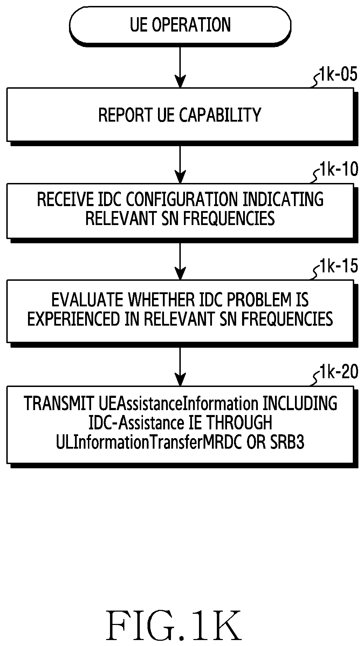

FIG. 1K is a flowchart of a terminal operation according to an embodiment of the disclosure;

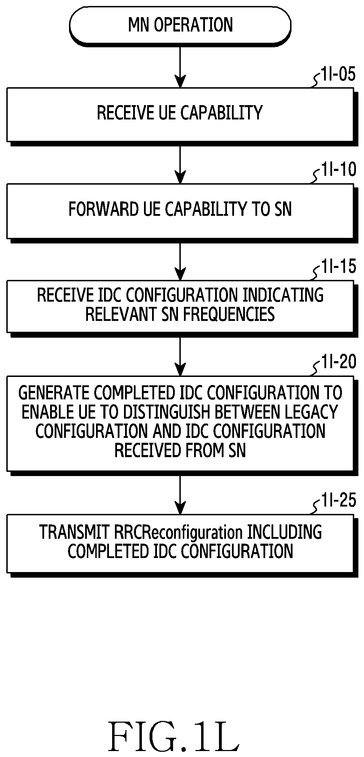

FIG. 1L is a flowchart of a base station operation according to an embodiment of the disclosure;

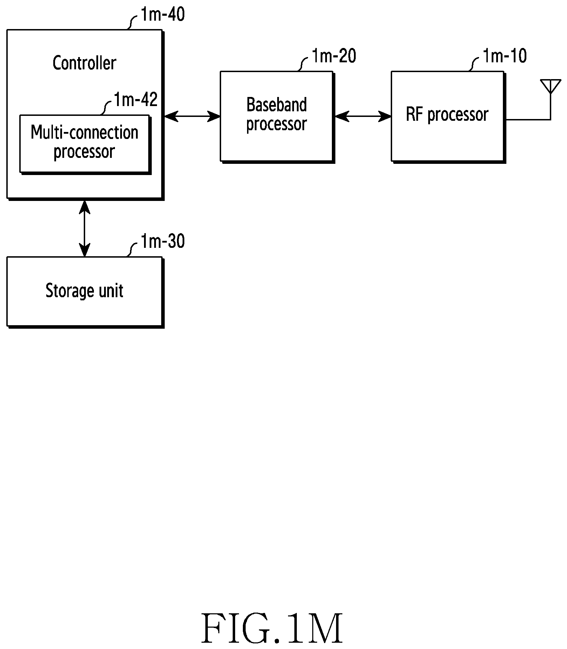

FIG. 1M is a block diagram illustrating an internal structure of a UE according to an embodiment of the disclosure.

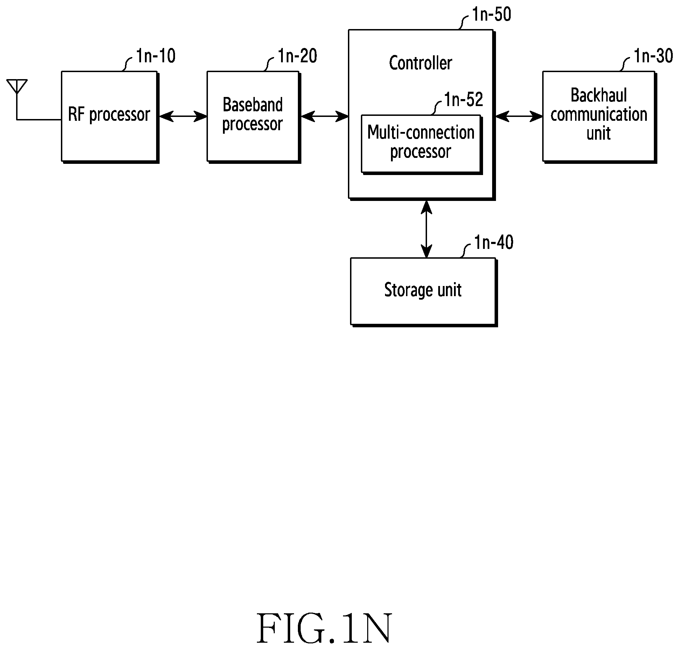

FIG. 1N is a block diagram illustrating a structure of a base station according to an embodiment of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) or new radio (NR) standards are used for the sake of descriptive convenience. However, the disclosure is not limited by these terms and names, and may be applied in the same way to systems that conform other standards.

In the following description, a base station (BS) is an entity that allocates resources to terminals, and may be at least one of a radio access network (RAN) node, a next generation node B (gNode B, gNB), an evolved node B (eNode B, eNB), a Node B, a wireless access unit, a base station controller, and a node on a network. In the disclosure, the term "eNB" may be interchangeably used with the term "gNB" for the sake of descriptive convenience. That is, a base station described as "eNB" may refer to "gNB".

A terminal may include a user equipment (UE), a mobile station (MS), a cellular phone, a smartphone, a computer, or a multimedia system capable of performing a communication function. Of course, the examples given above are not limiting.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and Internet of things (IoT)-related technology. In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (or eNB or gNB), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also require a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. In addition, based on determinations by those skilled in the art, the embodiments of the disclosure may be applied to other communication systems through some modifications without significantly departing from the scope of the disclosure.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

FIG. 1A illustrates a structure of a next-generation mobile communication system according to an embodiment of the disclosure.

Referring to FIG. 1A, as illustrated therein, a radio access network of a next-generation mobile communication system (new radio, NR) includes a next-generation base station (new radio node B, hereinafter gNB) 1a-10 and an access and mobility management function (AMF) 1a-05. A user equipment (new radio user equipment, hereinafter NR UE or NR terminal) 1a-15 accesses an external network via the gNB 1a-10 and the AMF 1a-05.

In FIG. 1A, the gNB corresponds to an evolved node B (eNB) of a conventional LTE system. The gNB may be connected to the NR UE through a radio channel and provide outstanding services as compared to a conventional node B (1a-20). In the next-generation mobile communication system, since all user traffic is serviced through a shared channel, a device that collects state information, such as buffer statuses, available transmit power states, and channel states of UEs, and performs scheduling accordingly is required, and the gNB 1a-10 serves as the device. In general, one gNB controls multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE. The AMF 1a-05 performs functions such as mobility support, bearer configuration, and QoS configuration. The AMF is a device responsible for various control functions as well as a mobility management function for a UE, and isa connected to multiple base stations. In addition, the next-generation mobile communication system may interwork with the existing LTE system, and the AMF may be connected to an MME 1a-25 via a network interface. The MME is connected to an eNB 1a-30 that is an existing base station. A UE supporting LTE-NR dual connectivity (EN-DC) may transmit/receive data while maintaining connections to both the gNB and the eNB (1a-35).

FIG. 1B is a flowchart of a process of reporting predetermined information that reports an item preferred by a UE, to a base station in a mobile communication system according to an embodiment of the disclosure.

A UE in an NR mobile communication system may report an item preferred thereby compared to a current configuration to a base station. For example, the UE may report at least one of items (or parameters) below to the base station.
- Preferred delay budget
- Power consumption reduction preference (UE power preference)
- Heat generation reduction preference (overheating assistance)
- IDC problem report and preferred solution (IDC assistance)

The base station to which the preferred items have been reported may trigger reconfiguration in response thereto. For example, the base station having received a report indicating that power consumption reduction, delay reduction, and heat generation reduction are preferred may perform reconfiguration by decreasing or increasing a discontinuous reception (DRX) period.

The UE may report a preferred delay budget and a heat generation reduction preference to the base station. In addition, the UE may report a preferred reconfiguration item in more detail to reduce heat generation or power consumption. The UE may report a maximum number of secondary cells (SCells), an aggregated bandwidth (BW) (frequency bandwidth), and a maximum number of multiple-input multiple-output (MIMO) layers, which are preferred by the UE.

With regard to a procedure for reporting the preferred item, a UE 1b-05 first reports, to a base station 1b-10, that the UE has a capability to report each of the items (operation 1b-15). Based on the capability information, the base station may configure that the UE is able to report each of the preferred items to the base station at a required time point (operation 1b-20). The UE reports an item preferred thereby to the base station at a required time point by using a UEAssistanceInformation message (operation 1b-25).

FIG. 1C is a diagram illustrating an in-device coexistence (IDC) technology according to an embodiment of the disclosure.

An IDC technology is a technology for minimizing interference when multiple communication modules within a device interfere with each other. Recently, UEs have a variety of functions and have various types of communication modules to support the functions. In addition to a new radio (NR) communication module 1c-00, a UE may include a global positioning system (GPS) module 1c-05 and a short-range communication module 1c-10, such as Bluetooth or wireless LAN. The modules transmit and receive required data through respective connected antennas 1c-15, 1c-20, and 1c-25. Although each communication system uses a different frequency band, when adjacent bands are used, interference between communication modules may occur. This is because it is impossible to ideally separate transmitted and received signals between bands. Moreover, since all communication modules and antennas connected thereto are included in a single UE device, the modules and antennas are located at a very short distance. As a result, the interference strength therebetween may be relatively high. Therefore, to mitigate such interference, it is necessary to control the transmission power of the communication modules. For example, when the short-range communication module 1c-10, such as Bluetooth or wireless LAN, attempts to receive data in the NR uplink, a transmission signal of the NR communication module 1c-00 may interfere with the short-range communication module 1c-10. Furthermore, an NR uplink signal may also interfere with another NR frequency or with the frequency of another mobile communication system. To alleviate this interference, the UE may control the amount of interference by limiting the maximum uplink transmission power of the NR communication module 1c-00. Alternatively, the UE may temporarily stop the operation of the NR communication module 1c-00 to remove the amount of interference power affecting the short-range communication module 1c-10. Conversely, in the NR downlink, the short-range communication module 1c-10 may cause interference with a reception signal of the NR communication module 1c-00.

FIG. 1D is a schematic diagram illustrating a frequency band adjacent to an ISM band among frequencies used for mobile communication in 3GPP according to an embodiment of the disclosure.

It may be noted that when a mobile communication cell uses Band 40 1d-05 and a wireless LAN uses channel 1, severe interference occurs, and when the mobile communication cell uses Band 7 1d-10 and a wireless LAN channel uses channel 13 or 14, severe interference occurs. Therefore, a method of properly avoiding such interference when same occurs is required.

In conventional NR systems, based on a configuration of a base station, a UE may report a UEAssistanceInformation message to the base station, the message including information (affectedCarrierFreqList field) on an NR frequency affected by an IDC problem, information (affectedCarrierFreqCombList field) on an NR frequency experiencing an IDC problem caused by intermodulation distortion and harmonics of an uplink NR signal configured in carrier aggregation (CA), or information on heterogeneous communication modules such as GPS, Bluetooth (BT), and wireless local area network (WLAN).

The disclosure proposes a method of reporting enhanced IDC-related information and a preferred solution by a UE. In particular, the disclosure proposes a method of reporting an IDC problem between 3GPP and non-3GPP systems to an SN in a multi-radio access technology (RAT) dual connectivity (MR-DC) scenario. Although the description of the disclosure is based on an NR-DC scenario (a case where both an MN and an SN are NR base stations in a DC environment), the described operations and features may be equally applied to other MR-DC scenarios.

FIG. 1E is a diagram illustrating a case where an MN provides frequency-of-interest information to an SN and a UE reports IDC information related to a corresponding frequency to the MN in an NR-DC environment according to an embodiment of the disclosure.

In a conventional technology, an SN 1e-10 may notify an MN 1e-05 of frequencies of interest for which the SN wants to identify whether an IDC problem is being experienced. The SN includes candidateServingFreqListNR and candidateServingFreqListEUTRA configuration information within a CG-Config message, which is an inter-node radio resource control (RRC) message (INM) between the MN and SN, and transmits the message to the MN. The candidateServingFreqListNR and candidateServingFreqListEUTRA contain NR and LTE frequencies of interest of the SN, respectively. The frequency of interest indicates a serving or non-serving frequency of the SN. The non-serving frequency refers to a frequency that is not currently a serving frequency but has a possibility of being configured as a serving frequency. The MN having received the information configures an idc-AssistanceConfig information element (IE) in consideration of frequencies of interest thereof. The IE includes a CandidateServingFreqListNR IE, and the CandidateServingFreqListNR includes a list of center frequencies (e.g., absolute radio frequency channel number (ARFCN)-value) for which a UE needs to report an IDC problem. The idc-AssistanceConfig IE is included in an RRCReconfiguration message and transmitted to a UE 1e-15. If the UE recognizes an IDC problem in a surrounding frequency range, based on the center frequency information, the UE includes an IDC-Assistance IE containing information on a frequency experiencing the IDC problem in a UEAssistanceInformation message and reports the IDC-Assistance IE to the MN. The MN having received the IDC-Assistance IE transfers the entire information included in the IE or information on a frequency of interest of the SN to the SN by using an affectedCarrierFreqCombInfoListMRDC IE within a CG-ConfigInfo message.

If the IDC problem occurs only in the frequencies of interest of the SN, directly reporting the IDC problem by the UE to the SN may be useful to reduce the complexity of the MN. Therefore, the disclosure proposes a method of reporting, to the SN, the IDC problem recognized by the UE in the above case.

FIG. 1F is a diagram illustrating a case where an MN provides frequency-of-interest information to an SN and a UE reports IDC information related to a corresponding frequency to the SN in an NR-DC environment according to an embodiment of the disclosure.

An SN 1f-10 may notify an MN 1f-05 of frequencies of interest for which the SN wants to identify whether an IDC problem is being experienced. The SN includes candidateServingFreqListNR and candidateServingFreqListEUTRA configuration information within a CG-Config message, which is an inter-node RRC message (INM) between the MN and SN, and transmits the message to the MN. The candidateServingFreqListNR and candidateServingFreqListEUTRA contain NR and LTE frequencies of interest of the SN, respectively. The SN may transmit, through a CG-Config message to the MN, a first indicator indicating the SN prefers to directly receive IDC information on the frequencies of interest of the SN from a UE 1f-15. The MN having received the information and the indicator may finally determine that the UE directly transmits IDC information on the frequencies of interest of the SN to the SN, and to this end, the MN needs to configure (or generate) configuration information enabling the UE to distinguish between the frequencies of interest of the MN and the frequencies of interest of the SN. In this embodiment, a method in which the MN distinguishes between the frequencies of interest of the MN and the frequencies of interest of the SN and transmits signaling to the UE is proposed.

First option: Separately from the conventional CandidateServingFreqList NR, the MN may configure CandidateServingFreqListForSCG information that is new list information including only the frequencies of interest of the SN. The new list may be included together in CandidateServingFreqList in a conventional IDC-AssistanceConfig IE, or may be included in a new IDC-AssistanceConfigForSCG IE. The CandidateServingFreqList may include frequency-of-interest information of both the MN and SN as in the conventional case, or may include only frequency-of-interest information of the MN.

Second option: The MN may configure a new second indicator together with the conventional CandidateServingFreqList NR. The new indicator may be included in a conventional IDC-AssistanceConfig IE or may be included in a new IDC-AssistanceConfigForSCG IE. If the indicator is included, the UE may select (or choose) frequencies of interest of the SN according to a predetermined rule. For example, the UE may consider, as the frequencies of interest of the SN, a current SN serving frequency or frequencies indicated by measObject IE configuration information of a measConfig IE configured by the SN. If an IDC problem is recognized among the current SN serving frequency or the frequencies indicated by the measObject IE configuration information of the measConfig IE configured by the SN, the UE may report, to the SN, information on a frequency experiencing the IDC problem. The UE may select (or choose) the frequencies of interest of the SN according to the predetermined rule, among only frequencies belonging to the CandidateServingFreqList.

Third option: The CandidateServingFreqList may include frequency-of-interest information of both the MN and SN as in the conventional case, and the MN indicates which frequencies are the frequencies of interest of the SN among the frequencies belonging to the CandidateServingFreqList, through new bitmap information. That is, if an IDC problem is recognized among the indicated frequencies through the bitmap, the UE reports information on a frequency experiencing the IDC problem to the SN. FIG. 1G is a diagram illustrating a bitmap form indicating a frequency of interest provided by an SN in relation to the third option according to an embodiment of the disclosure. The first bit of each bitmap 1g-05 corresponds to a frequency included in the first entry of CandidateServingFreqList. The second bit corresponds to a frequency included in the second entry. If a frequency corresponding to the third entry of CandidateServingFreqList is a frequency of interest of the SN, the third bit of the bitmap is configured as 1. The size of the bitmap is equal to a total number of entries which may be included in the CandidateServingFreqList. IDC configuration information configured according to the option is included in an RRCReconfiguration message and transmitted to the UE.

If an IDC problem occurs only in the frequencies of interest of the SN, the UE having received the IDC configuration information may directly report information on a frequency experiencing the IDC problem to the SN. If SRB3 is configured for the UE, the UE transmits a UEAssistanceInformation message including IDC report information (tentatively named IE IDC-AssistanceMRDC) to the SN. If SRB3 is not configured for the UE, the UE includes a UEAssistanceInformation message including the IDC report information in an RRC container in a ULInformationTransferMRDC message, and transmits the ULInformationTransferMRDC message to the MN. The ULInformationTransferMRDC message is an RRC message mainly used by the UE to transmit an SN RRC message to the SN via the MN when SRB3 is not configured, and the message has an RRC container capable of including the SN RRC message. The MN having received the ULInformationTransferMRDC message forwards the SN RRC message included in the container to the SN. The IE IDC-AssistanceMRDC may include an indicator indicating a frequency experiencing an IDC problem, for example, a list of ARFCN-ValueNR (or ARFCN-ValueEUTRA), information on a frequency range in a frequency of interest of the SN experiencing the IDC problem, or time division multiplexing (TDM) scheduling pattern information required for avoiding the IDC problem. The frequency range may be represented by one of the following methods.
- Center frequency + Bandwidth of the actual affected frequency range
- Starting frequency + Ending frequency of the actual affected frequency ranges
- Starting frequency + Bandwidth of the actual affected frequency range

The SN having received the IDC information from the UE may reconfigure a serving frequency or adjust a scheduling pattern to avoid or mitigate the IDC problem.

FIG. 1H is a flowchart of a process in which an MN provides frequency-of-interest information to an SN and a UE reports IDC information related to a corresponding frequency to the SN in an NR-DC environment according to an embodiment of the disclosure.

A UE 1h-05 reports, to a base station 1h-10, that the UE has a capability to report the predetermined IDC information (operation 1h-15). In this case, the UE 1h-05 reports, to the base station 1h-10, an indicator indicating a capability to report the IDC information. The base station 1h-10 in this process may be the MN 1h-10 of DC. Alternatively, the UE 1h-10 may also report an indicator indicating whether the UE is able to report IDC information to an SN 1h-13. Each UE capability information is considered as being optional with signal or optional without signal.

The MN 1h-10 receives a CG-Config message from the SN 1h-13 (operation 1h-17). The CG-Config message may include a new indicator indicating that the SN 1h-13 requests to directly receive a report of IDC information from the UE 1h-05, along with the conventional candidateServingFreqListNR and candidateServingFreqListEUTRA. According to the request of the SN 1h-13, the MN 1h-10 may determine, by itself, whether to actually configure the UE 1h-05 to report IDC information directly to the SN 1h-13. The MN 1h-10 includes IDC configuration information in an OtherConfig IE of an RRCReconfiguration message and transmits the message to the UE 1h-05 (operation 1h-20). Through a predetermined IE idc-AssistanceConfig, the MN 1h-10 configures, through a predetermined indicator for the UE 1h-05, that the UE 1h-05 is able to report the predetermined information to the MN. If the IE is configured, this implies that the UE 1h-05 is able to report information on an NR frequency experiencing an IDC problem or report that an IDC problem caused by intermodulation distortion/harmonics from an NR frequency has occurred in another NR frequency or another communication module when uplink carrier aggregation is configured. In particular, the IE includes a list of reportable frequencies among NR frequencies experiencing the IDC problem. The MN 1h-10 includes the list in a CandidateServingFreqListNR IE, and each frequency belonging to the list is indicated by an ARFCN-ValueNR IE that indicates a center frequency. Even if an IDC problem occurs, frequencies not belonging to the list may not be reported. If the IE is not provided, the UE 1h-05 reports, to the base station, information on a frequency experiencing an IDC problem among NR frequencies supported by the UE. The IDC configuration information may include configuration information according to the aforementioned options. The IDC configuration information includes information on frequencies required to be reported when an IDC problem occurs. Among the frequencies, both frequencies selected (or chosen) by the MN and frequencies selected (or chosen) by the SN may be included, or only the frequencies selected (or chosen) by the MN or SN may be included. The UE 1h-05 may distinguish frequencies required to be reported to the SN 1h-13 from the IDC configuration information according to the aforementioned options.

If the configuration indicator(s) or configuration information is included in the idc-AssistanceConfig IE, the UE 1h-05 may report information corresponding to the indicator or perform a function. The UE 1h-05 recognizes that an IDC problem has occurred in some or all of the frequencies indicated in the IDC configuration information (operation 1h-25). The UE 1h-05 recognizes that an IDC problem has occurred in the frequencies selected (or chosen) by the SN 1h-13 or the frequency or frequencies required to be reported to the SN 1h-13. In this case, the UE 1h-05 determines whether SRB3 is configured (operation 1h-27). If SRB3 is not configured for the UE, the UE 1h-05 includes, in a ULInformationTransferMRDC message, information on a frequency associated with the SN 1h-13 experiencing the IDC problem and transmits the message to the MN 1h-10 (operation 1h-30). The information on the frequency may include at least one of indicator information (ARFCN-ValueNR or ARFCN-ValueEUTRA) indicating a frequency experiencing the IDC problem, a frequency range experiencing the IDC problem, and TDM pattern information required for avoiding or mitigating the IDC problem. The MN 1h-10 having received the reported information forwards the information to the SN 1h-13 (operation 1h-35). If SRB3 is configured for the UE, the UE 1h-05 transmits a UEAssistanceInformation message including the information to the SN 1h-13 by using the SRB3 (operation 1h-40). According to this operation, if an IDC problem occurs only in frequencies related to the SN 1h-13, the UE 1h-05 may advantageously transfer the problem to the SN 1h-13 rapidly, without the involvement of the MN 1h-10. If an IDC problem occurs in frequencies related to both the MN 1h-10 and the SN 1h-13, the UE 1h-05 may report information on frequencies related to the MN 1h-10 to the MN 1h-10 and report information on frequencies related to the SN 1h-13 directly to the SN 1h-13. The information on the frequencies related to the SN 1h-13 may be reported to the MN 1h-10 and then transferred by the MN 1h-10 to the SN 1h-13. At the same time, the UE 1h-05 may directly report the information on the frequencies related to the SN 1h-13 to the SN 1h-13. In such a case, the SN 1h-13 receives information on a particular frequency through both paths. The pieces of information received by the SN 1h-13 through the two paths may be the same or different. In this case, the SN 1h-13 may use only one piece of information or may use both according to a predetermined rule.

FIG. 1I is a diagram illustrating a case where a UE reports a frequency of interest provided by an SN to the SN by using an ULInformationTransferMRDC message according to an embodiment of the disclosure.

In this embodiment, a method in which an SN 1i-10 directly configures (or generates) IDC configuration information and provides same to a UE through an MN 1i-05 is proposed. If SRB3 is not configured for a UE 1i-15, the SN 1i-10 may transmit an SN RRCReconfiguration message to the MN through an scg-CellGroupConfig field of a CG-Config message. An OtherConfig IE of the SN RRCReconfiguration message includes IDC configuration information (IDC-AssistanceConfig). CandidateServingFreqListNR included in the IDC-AssistanceConfig IE includes information (e.g., ARFCN-ValueNR) on a serving frequency of the SN and a non-serving frequency that may become a serving frequency, and this implies that the UE reports an IDC problem when the IDC problem occurs on the frequencies. In addition, since the SN may be an LTE base station, a new CandidateServingFreqListEUTRA list may be added to the IDC-AssistanceConfig IE. The IDC-AssistanceConfig IE includes information (e.g., ARFCN-ValueEUTRA) on an LTE serving frequency of the SN and an LTE non-serving frequency that may become a serving frequency, and this implies that the UE reports an IDC problem when the IDC problem occurs on the frequencies. The MN 1i-05 having received the message includes the SN RRCReconfiguration message in an mrdc-SecondaryCellGroupConfig field of an RRCReconfiguration message and transmits same to the UE 1i-15. The mrdc-SecondaryCellGroupConfig field is used to transfer the RRCReconfiguration message configured by the SN 1i-10 to the UE.

The UE having received the mrdc-SecondaryCellGroupConfig determines whether an IDC problem occurs in the frequencies indicated in the CandidateServingFreqListNR or the CandidateServingFreqListEUTRA. If the list information is not provided, the UE determines whether an IDC problem occurs in a frequency supported by the UE or a current serving frequency. If an IDC problem occurs in at least one of the indicated frequencies, the UE includes IDC-related information (e.g., IDC-AssistanceMRDC) required for avoiding or mitigating the problem in a ULInformationTransferMRDC message and transmits same to the MN. The MN having received the information forwards the information to the SN.

FIG. 1J is a diagram illustrating a case where a UE directly reports a frequency of interest provided by an SN to the SN through SRB3 according to an embodiment of the disclosure.

In this embodiment, a method in which an SN 1j-10 directly configures IDC configuration information and directly provides same to a UE is proposed. If SRB3 is configured for a UE 1j-15, an SN 1j-10 may transmit an SN RRCReconfiguration message to the UE 1j-15 through the SRB3. An OtherConfig IE of the SN RRCReconfiguration message includes IDC configuration information (IDC-AssistanceConfig). CandidateServingFreqListNR included in the IDC-AssistanceConfig IE includes information (e.g., ARFCN-ValueNR) on a serving frequency of the SN and a non-serving frequency that may become a serving frequency, and this implies that the UE 1j-15 reports an IDC problem when the IDC problem occurs on the frequencies. In addition, since the SN 1j-10 may be an LTE base station, a new CandidateServingFreqListEUTRA list may be added to the IDC-AssistanceConfig IE. The IDC-AssistanceConfig IE includes information (e.g., ARFCN-ValueEUTRA) on an LTE serving frequency of the SN and an LTE non-serving frequency that may become a serving frequency, and this implies that the UE reports an IDC problem when the IDC problem occurs on the frequencies.

The UE 1j-15 having received the IDC-AssistanceConfig determines whether an IDC problem occurs in the frequencies indicated in the CandidateServingFreqListNR or the CandidateServingFreqListEUTRA. If the list information is not provided, the UE 1j-15 determines whether an IDC problem occurs in a frequency supported by the UE or a current serving frequency. If an IDC problem occurs in at least one of the indicated frequencies, the UE 1j-15 includes IDC-related information (e.g., IDC-AssistanceMRDC) required for avoiding or mitigating the problem in a UEAssistanceInformation message and transmits same to the SN 1j-10.

The SN 1j-10 having received the IDC-related information required for avoiding or mitigating the problem may reconfigure a frequency not experiencing an IDC problem or adjust scheduling to prevent data transmission and reception at a timing at which an IDC problem occurs.

FIG. 1K is a flowchart of a UE operation according to an embodiment of the disclosure.

In operation 1k-05, a UE reports that the UE has a capability to report the predetermined IDC information, to a base station. The base station may be an MN or an SN of DC.

In operation 1k-10, the UE receives an RRCReconfiguration message from the base station. The message includes an OtherConfig IE including an idc-AssistanceConfig IE. The IE idc-AssistanceConfig is used to configure that the UE is able to report the predetermined information to the base station. In addition, the IE may include frequency information related to the SN.

In operation 1k-15, the UE determines (or evaluates) whether an IDC problem is being experienced in a frequency of interest of the SN.

In operation 1k-20, the UE transmits a UEAssistanceInformation message including the proposed information to the SN through SRB3, or transmits the message to the MN through a ULInformationTransferMRDC message.

FIG. 1L is a flowchart of an MN base station operation according to an embodiment of the disclosure.

In operation 11-05, an MN base station receives UE capability information from a UE.

In operation 1l-10, the MN base station transfers the UE capability information to an SN base station.

In operation 1l-15, the MN base station receives IDC configuration information having SN frequency-of-interest information from the SN base station.

In operation 1l-20, the MN base station configures (or generates) configuration parameters, based on the received information.

In operation 1l-25, the MN base station includes the configuration information in an RRCReconfiguration message and transmits same to the UE. Subsequently, the MN base station may receive IDC-related information on an SN frequency of interest from the UE through a ULInformationTransferMRDC message.

Hereinafter, an SN base station operation according to an embodiment of the disclosure is also described.

An SN base station receives UE capability information directly from a UE or from an MN base station. The SN base station generates IDC configuration information having SN frequency-of-interest information and transmits the IDC configuration information to the MN or directly to the UE. Subsequently, the SN base station may receive IDC-related information on an SN frequency of interest from the UE through SRB3, or may receive IDC-related information transmitted by the UE from the MN base station.

FIG. 1M is a block diagram illustrating an internal structure of a UE according to an embodiment of the disclosure.

Referring to the drawing, the UE may include a radio frequency (RF) processor 1m-10, a baseband processor 1m-20, a storage unit 1m-30, and a controller 1m-40.

The RF processor 1m-10 may perform functions for transmitting/receiving signals through a radio channel, such as signal band conversion and amplification. That is, the RF processor 1m-10 may up-convert a baseband signal provided from the baseband processor 1m-20 to an RF band signal, may transmit the same through an antenna, and may down-convert an RF band signal received through the antenna to a baseband signal. For example, the RF processor 1m-10 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 1m-10 may include multiple RF chains. Furthermore, the RF processor 1m-10 may perform beamforming. For the beamforming, the RF processor 1m-10 may adjust the phase and magnitude of signals transmitted/received through multiple antennas or antenna elements, respectively. In addition, the RF processor may perform MIMO, and may receive multiple layers when performing a MIMO operation.

The baseband processor 1m-20 may perform functions of conversion between baseband signals and bitstrings according to the physical layer specifications of the system. For example, during data transmission, the baseband processor 1m-20 may encode and modulate a transmitted bitstring to generate complex symbols. In addition, during data reception, the baseband processor 1m-20 may demodulate and decode a baseband signal provided from the RF processor 1m-10 to restore a received bitstring. For example, when following the orthogonal frequency division multiplexing (OFDM) scheme, during data transmission, the baseband processor 1m-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 1m-20 may split a baseband signal provided from the RF processor 1m-10 at the OFDM symbol level, may restore signals mapped to subcarriers through a fast Fourier transform (FFT) operation, and may restore a received bitstring through demodulation and decoding.

The baseband processor 1m-20 and the RF processor 1m-10 may transmit and receive signals as described above. Therefore, the baseband processor 1m-20 and the RF processor 1m-10 may be referred to as a transmitter, a receiver, a transceiver, or a communication unit. Furthermore, at least one of the baseband processor 1m-20 and the RF processor 1m-10 may include multiple communication modules to support multiple different radio access technologies. In addition, at least one of the baseband processor 1m-20 and the RF processor 1m-10 may include different communication modules to process signals in different frequency bands. For example, the different radio access technologies may include wireless LANs (for example, IEEE 802.11), cellular networks (for example, LTE), and the like. In addition, the different frequency bands may include super high frequency (SHF) (e.g., 2 NRHz) bands and millimeter wave (mmWave) (e.g., 60GHz) bands.

The storage unit 1m-30 stores data such as basic programs for operation of the UE, application programs, and configuration information. Particularly, the storage unit 1m-30 may store information regarding a second access node configured to perform wireless communication by using a second radio access technology. In addition, the storage unit 1m-30 may provide the stored data at the request of the controller 1m-40.

The controller 1m-40 controls the overall operation of the UE. For example, the controller 1m-40 may transmit/receive signals through the baseband processor 1m-20 and the RF processor 1m-10. In addition, the controller 1m-40 records data in the storage unit 1m-30 and reads the data from the storage unit 1m-30. To this end, the controller 1m-40 may include at least one processor. For example, the controller 1m-40 may include a communication processor (CP) configured to perform control for communication, and an application processor (AP) configured to control upper layers such as application programs. The controller 1m-40 may further include a multi-connection processor 1m-42 to support multiple connections.

FIG. 9 is a block diagram illustrating a structure of a base station according to an embodiment of the disclosure.

As illustrated in the drawing, the base station may include an RF processor 1n-10, a baseband processor 1n-20, a backhaul communication unit 1n-30, a storage unit 1n-40, and a controller 1n-50.

The RF processor 1n-10 may perform functions for transmitting/receiving signals through a radio channel, such as signal band conversion and amplification. That is, the RF processor 1n-10 may up-convert a baseband signal provided from the baseband processor 1n-20 to an RF band signal, may transmit the same through an antenna, and may down-convert an RF band signal received through the antenna to a baseband signal. For example, the RF processor 1n-10 may include a transmission filter, a reception filter, an amplifier, a mixer, an oscillator, a DAC, and an ADC. Although only one antenna is illustrated in the drawing, the first access node may include multiple antennas. In addition, the RF processor 1n-10 may include multiple RF chains. Furthermore, the RF processor 1n-10 may perform beamforming. For the beamforming, the RF processor 1n-10 may adjust the phase and magnitude of signals transmitted/received through multiple antennas or antenna elements, respectively. The RF processor may transmit one or more layers to perform a downward MIMO operation.

The baseband processor 1n-20 may perform functions of conversion between baseband signals and bitstrings according to the physical layer specifications of a first radio access technology. For example, during data transmission, the baseband processor 1n-20 may encode and modulate a transmitted bitstring to generate complex symbols. In addition, during data reception, the baseband processor 1n-20 may demodulate and decode a baseband signal provided from the RF processor 1n-10 to restore a received bitstring. For example, when following the OFDM scheme, during data transmission, the baseband processor 1n-20 may encode and modulate a transmitted bitstring to generate complex symbols, may map the complex symbols to subcarriers, and may configure OFDM symbols through IFFT operation and CP insertion. In addition, during data reception, the baseband processor 1n-20 may split a baseband signal provided from the RF processor 1n-10 at the OFDM symbol level, may restore signals mapped to subcarriers through FFT operation, and may restore a received bitstring through demodulation and decoding. The baseband processor 1n-20 and the RF processor 1n-10 may transmit and receive signals as described above. Therefore, the baseband processor 1n-20 and the RF processor 1n-10 may be referred to as a transmitter, a receiver, a transceiver, or a communication unit.

The backhaul communication unit 1n-30 provides an interface for communicating with other nodes in the network. That is, the backhaul communication unit 1n-30 converts bitstrings transmitted from the main base station to other nodes, for example, an auxiliary base station, a core network, etc., into physical signals, and converts physical signals received from the other nodes into bitstrings.

The storage unit 1n-40 may store data such as basic programs for operation of the main base station, application programs, and configuration information. Particularly, the storage unit 1n-40 may store information regarding a bearer allocated to a connected UE, a measurement result reported from the connected UE, and the like. In addition, the storage unit 1n-40 may store information serving as a reference to determine whether to provide multi-connection to a UE or to suspend the same. In addition, the storage unit 1n-40 may provide the stored data at the request of the controller 1n-50.

The controller 1n-50 controls the overall operation of the main base station. For example, the controller 1n-50 transmits/receives signals through the baseband processor 1n-20 and the RF processor 1n-10 or through the backhaul communication unit 1n-30. In addition, the controller 1n-50 records data in the storage unit 1n-40 and reads the data from the storage unit 1n-40. To this end, the controller 1n-50 may include at least one processor. The controller 1n-50 may further include a multi-connection processor 1n-52 to support multiple connections.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer- readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. For example, a part or all of an embodiment may be combined with a part or all of one or more other embodiments, and it is natural that an implementation of such combination also corresponds to an embodiment proposed by the disclosure. Therefore, the scope of the disclosure should not be defined as being limited to the embodiments set forth herein, but should be defined by the appended claims and equivalents thereof.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving, from a first base station, in-device coexistence (IDC) configuration information in which an IDC-related configuration provided by a second base station is reflected, based on a new radio dual connectivity (NR-DC) configured for the first base station and the second base station supporting a new radio (NR); and
transmitting, to the first base station, a message for reporting an IDC problem based on the IDC configuration information,
wherein the message comprises first information on a frequency range related to the IDC problem and second information on time division multiplexing (TDM) related to the IDC problem.

2. The method of claim 1, wherein the first information comprises information on a center frequency and a bandwidth of a carrier affected by the IDC problem, and
wherein the second information comprises information on a TDM pattern for mitigating the IDC problem.

3. The method of claim 1, wherein the first base station is a master base station related to the NR-DC, and the second base station is a secondary base station related to the NR-DC.

4. The method of claim 3, wherein the IDC configuration information is transferred from the second base station to the terminal via the first base station, and
wherein the message is transferred from the terminal to the second base station via the first base station.

5. A method performed by a first base station in a wireless communication system, the method comprising:
receiving, from a second base station, an in-device coexistence (IDC)-related configuration, based on a new radio dual connectivity (NR-DC) configured for the first base station and the second base station supporting a new radio (NR);
transmitting, to a terminal, IDC configuration information in which the IDC-related configuration is reflected; and
receiving, from the terminal, a message for reporting an IDC problem based on the IDC configuration information,
wherein the message comprises first information on a frequency range related to the IDC problem and second information on time division multiplexing (TDM) related to the IDC problem.

6. The method of claim 5, wherein the first information comprises information on a center frequency and a bandwidth of a carrier affected by the IDC problem, and
wherein the second information comprises information on a TDM pattern for mitigating the IDC problem.

7. The method of claim 5, wherein the first base station is a master base station related to the NR-DC, and the second base station is a secondary base station related to the NR-DC,
wherein the IDC configuration information is transferred from the second base station to the terminal via the first base station, and
wherein the message is transferred from the terminal to the second base station via the first base station.

8. A terminal in a wireless communication system, the terminal comprising:
a transceiver; and
a controller connected to the transceiver,
wherein the controller is configured to:
receive, from a first base station, in-device coexistence (IDC) configuration information in which an IDC-related configuration provided by a second base station is reflected, based on a new radio dual connectivity (NR-DC) configured for the first base station and the second base station supporting new radio (NR); and
transmit, to the first base station, a message for reporting an IDC problem based on the IDC configuration information, and
wherein the message comprises first information on a frequency range related to the IDC problem and second information on time division multiplexing (TDM) related to the IDC problem.

9. The terminal of claim 8, wherein the first information comprises information on a center frequency and a bandwidth of a carrier affected by the IDC problem, and
wherein the second information comprises information on a TDM pattern for mitigating the IDC problem.

10. The terminal of claim 8, wherein the first base station is a master base station related to the NR-DC, and the second base station is a secondary base station related to the NR-DC.

11. The terminal of claim 10, wherein the IDC configuration information is transferred from the second base station to the terminal via the first base station, and
wherein the message is transferred from the terminal to the second base station via the first base station.

12. A first base station in a wireless communication system, the first base station comprising:
a transceiver; and
a controller connected to the transceiver,
wherein the controller is configured to:
receive, from a second base station, an in-device coexistence (IDC)-related configuration, based on new radio dual connectivity (NR-DC) configured for the first base station and a second base station supporting new radio (NR);
transmit, to a terminal, IDC configuration information in which the IDC-related configuration is reflected; and
receive, from the terminal, a message for reporting an IDC problem based on the IDC configuration information, and
wherein the message comprises first information on a frequency range related to the IDC problem and second information on time division multiplexing (TDM) related to the IDC problem.

13. The first base station of claim 12, wherein the first information comprises information on a center frequency and a bandwidth of a carrier affected by the IDC problem, and
wherein the second information comprises information on a TDM pattern for mitigating the IDC problem.

14. The first base station of claim 12, wherein the first base station is a master base station related to the NR-DC, and the second base station is a secondary base station related to the NR-DC.

15. The first base station of claim 14, wherein the IDC configuration information is transferred from the second base station to the terminal via the first base station, and
wherein the message is transferred from the terminal to the second base station via the first base station.
